# EUROPEAN PATENT SPECIFICATION

(11) **EP 2 233 278 B1**
(45) Date of publication and mention of the grant of the patent: **16.07.2014**
(21) Application number: 10156931.7
(22) Date of filing: 18.03.2010
(51) Int. Cl.: B29C 65/52, B05C 11/10, A41H 43/04, D06H 5/00

(54) **Cloth bonding apparatus**
Vorrichtung zum Verbinden von Stoff
Appareil de liaison de tissus

(30) Priority: 25.03.2009 JP 2009074791
(43) Date of publication of application: 29.09.2010
(73) Proprietor: Brother Kogyo Kabushiki Kaisha, Nagoya-shi, Aichi 467-8561 (JP)
(72) Inventor: Tada, Satoru, Nagoya-shi Aichi 467-8562 (JP); Yoshimoto, Naoki, Nagoya-shi Aichi 467-8562 (JP); Ohmura, Yoshikazu, Nagoya-shi Aichi 467-8562 (JP); Umeda, Kazutoshi, Nagoya-shi Aichi 467-8562 (JP); Iwakoshi, Hiroyasu, Nagoya-shi Aichi 467-8562 (JP); Yamaura, Hiroki, Nagoya-shi Aichi 467-8562 (JP); Enya, Tetsuji, Nagoya-shi Aichi 467-8562 (JP)
(74) Representative: Prüfer & Partner GbR European Patent Attorneys

(56) References cited:
- EP-A2- 0 425 866
- WO-A1-01/89812
- US-A1- 2003 010 439

## Description

### BACKGROUND

The present invention relates to a cloth bonding apparatus. More specifically, the present invention relates to a cloth bonding apparatus including a storage chamber that stores an adhesive therein.

A cloth bonding apparatus is directed for bonding cloths with an adhesive instead of sewing the cloths with a needle and a thread. By bonding the cloths with the adhesive, the cloth bonding apparatus can eliminate unevenness due to the thread that may be formed in the cloth surfaces when the cloths are sewn with the thread. The cloth surfaces processed by the cloth bonding apparatus are smooth. The clothes manufactured by the cloths have no unevenness due to the thread when being worn. Therefore, the cloth bonding apparatus can manufacture nice and soft clothes.

The cloth bonding apparatus discharges a liquid adhesive from a nozzle. The adhesive adheres onto a cloth. The worker then places another cloth on top of the cloth on which the adhesive has been applied. The cloth bonding apparatus presses the cloths in a pressurized manner. The cloth bonding apparatus bonds the cloths through this procedure.

The cloth bonding apparatus has a storage chamber. The storage chamber stores the adhesive therein. The cloth bonding apparatus supplies a gas into the storage chamber thereby to push the adhesive from the storage chamber. The pushed adhesive is discharged from the nozzle. With an apparatus described in Japanese Patent Application Laid-Open No. 2-265670, a gas to be supplied into the storage chamber is controlled based on a gas pressure inside a storage chamber detected by a pressure sensor. Thus, the apparatus can push an appropriate amount of adhesive from the storage chamber.

Document US 2003/010439 A1 discloses a cloth bonding apparatus comprising a storage chamber adapted to store an adhesive therein, a sensor that detects a pressure inside the storage chamber, an adhesive supply portion adapted to supply the adhesive to a nozzle, and an adhesive supply controlling portion that controls that adhesive supply portion. The adhesive supply controlling portion controls the adhesive supply portion to stop supplying the adhesive.

Document WO 01/89812 A1 discloses a device for assembling textile materials, comprising an applicator with at least one opening. Said opening enables a liquid assembly medium to be at least partially applied between two or more essentially flat lengths of textile material which at least partially overlap each other. The device is characterized in that the applicator is designed to bring said opening into the vicinity of a surface of the textile material, without making a hole in said textile material.

Document EP 0 425 866 A2 discloses a device for applying a small amount of e.g. adhesive to a circuit board. The adhesive is supplied from a cooled storage container to an interstation via a first cooled path way by pressure. In the interstation, the adhesive is warmed and depressurized such that there is the desired working pressure at the dispenser head. The interstation is connected to the dispenser head via a second path way. At least on of the path ways is flexible.

### SUMMARY

The above-described apparatus controls the pressure assuming that the inside of the storage chamber is tightly sealed. When the storage chamber is not tightly sealed (when the cover of the storage chamber is open, for example), a sufficient gas pressure is not applied into the storage chamber. Thus, the apparatus may not push an appropriate amount of adhesive from the storage chamber since the pressure inside the storage chamber cannot be controlled based on the measured gas pressure.

It is an object of the present invention to provide a cloth bonding apparatus that prohibits an adhesive from being discharged when a sufficient gas pressure is not applied into the storage chamber.

A cloth bonding apparatus according to a first aspect comprises a storage chamber adapted to store an adhesive therein, a gas supply portion adapted to supply a gas into the storage chamber thereby to push the adhesive inside the storage chamber to a downstream side, a sensor that detects a gas pressure inside the storage chamber, an adhesive supply portion adapted to supply the adhesive pushed out of the storage chamber by the gas supply portion to a nozzle, and an adhesive supply controlling portion that controls the adhesive supply portion, wherein when the gas pressure detected by the sensor is less than a predetermined value, the adhesive supply controlling portion controls the adhesive supply portion to stop supplying the adhesive. The cloth bonding apparatus obtains the gas pressure inside the storage chamber detected by the sensor. The cloth bonding apparatus controls the supplying portion to stop supplying the adhesive when the obtained gas pressure is smaller than the predetermined value. The cloth bonding apparatus can prohibit the adhesive from being discharged when a predetermined gas pressure has not been applied into the storage chamber. The cloth bonding apparatus can discharge an appropriate amount of adhesive.

A cloth bonding apparatus according to a second aspect may further comprise a feeding portion adapted to press cloths and feed a first layer of cloth with a second layer of cloth in a direction intersecting with a direction in which the adhesive is discharged from the nozzle, a driving portion that drives the feeding portion, and a drive controlling portion that controls the driving portion, wherein when the gas pressure detected by the sensor is less than the predetermined value, the drive controlling portion may control the driving portion to stop feeding the cloth. In this case, the cloth bonding apparatus can stop feeding the cloths when the predetermined gas pressure has not been applied into the storage chamber. The cloth bonding apparatus can prevent the cloths from being fed while the adhesive is not discharged.

A cloth bonding apparatus according to a third aspect may further comprise a gas supply controlling portion that controls the gas supply portion to supply or stop supplying the gas into the storage chamber, wherein when the gas pressure detected by the sensor is less than the predetermined value, the gas supply controlling portion may control the gas supply portion to stop supplying the gas into the storage chamber. In this case, the cloth bonding apparatus controls the gas supply mechanism thereby to prohibit the adhesive from being discharged when the predetermined gas pressure has not been applied into the storage chamber. The cloth bonding apparatus can discharge an appropriate amount of adhesive.

A cloth bonding apparatus according to a fourth aspect wherein the gas supply portion may include a channel that connects the storage chamber to a gas supply source for supplying the gas, and a valve that is provided in the channel and that can be opened and closed to control the gas pressure inside the storage chamber, and when the gas pressure detected by the sensor is less than the predetermined value, the gas supply controlling portion may close the valve. In this case, the cloth bonding apparatus closes the valve thereby to stop supplying the gas when the predetermined gas pressure has not been applied into the storage chamber. The cloth bonding apparatus can prevent the gas from being continuously supplied into the storage chamber while the storage chamber is not tightly sealed.

The gas supply source of a cloth bonding apparatus according to a fifth aspect wherein the gas supply source may include a compressor, and when the gas pressure detected by the sensor is less than the predetermined value, the gas supply controlling portion may control the compressor to stop supplying the gas into the storage chamber. In this case, the cloth bonding apparatus can prevent the gas from being continuously supplied into the storage chamber while the storage chamber is not tightly sealed.

### BRIEF DESCRIPTION OF THE DRAWINGS

Fig. 1 is an upper front perspective view of a cloth bonding apparatus 1;
Fig. 2 is an upper front perspective view of a bonding machine 2;
Fig. 3 is a front view of the bonding machine 2;
Fig. 4 is a left side view of the bonding machine 2;
Fig. 5 is a partially enlarged front view of a storage chamber 18;
Fig. 6 is an upper front perspective view of an inner configuration of the bonding machine 2;
Fig. 7 is a sectional view taken along line I-I of Fig. 2;
Fig. 8 is a sectional view taken along line II-II of Fig. 2;
Fig. 9 is a partially enlarged perspective view of a nozzle 17 and a vicinity of the nozzle during work;
Fig. 10 is a block diagram showing an electric configuration of the cloth bonding apparatus 1;
Fig. 11 is a flow chart of operation preparation processing;
Fig. 12 is a flow chart of post-processing;
Fig. 13 is a flow chart of bond processing;
Fig. 14 is an upper front perspective view of a cloth bonding apparatus 5;
Fig. 15 is a block diagram showing an electric configuration of the cloth bonding apparatus 5;
Fig. 16 is a flow chart of operation preparation processing according to a

### second embodiment; and

Fig. 17 is a flow chart of post-processing according to the second embodiment.

### DETAILED DESCRIPTION OF EXEMPLARY EMBODIMENTS

### <First embodiment>

A cloth bonding apparatus 1 according to a first embodiment of the present invention will be described below with reference to the drawings.

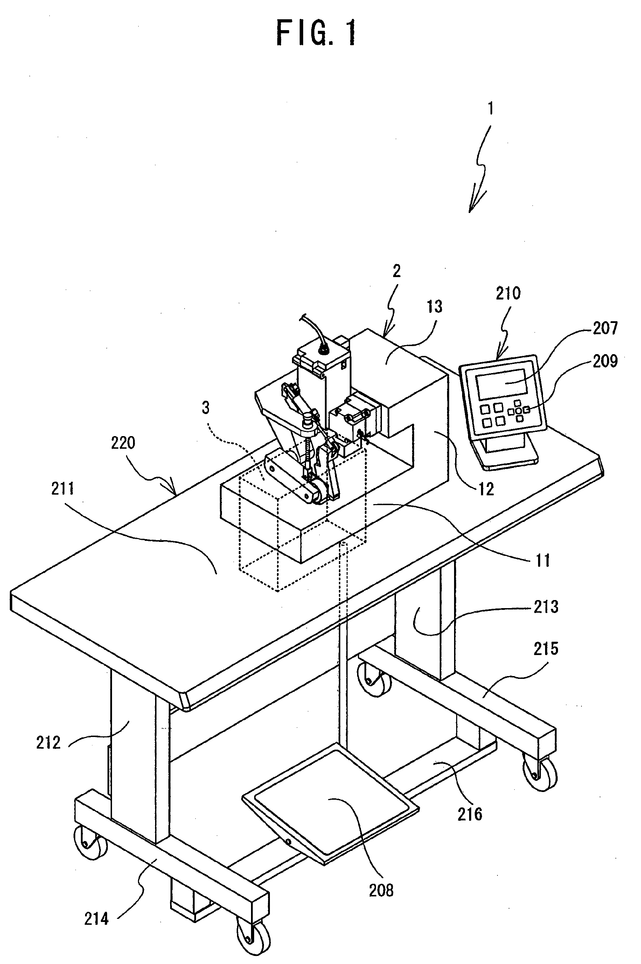

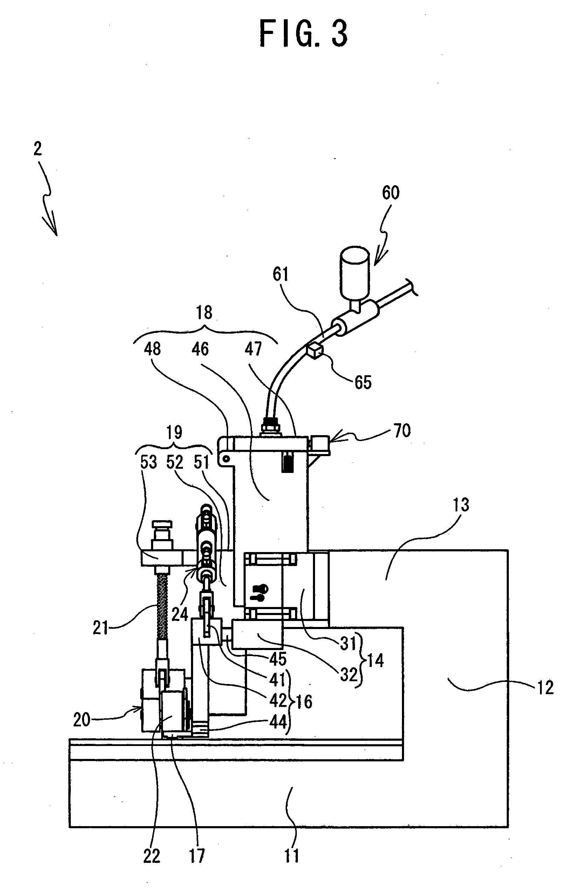

A configuration of the cloth bonding apparatus 1 will be described with reference to Figs. 1 to 4. In the following description, it is defined that the upper side, the lower side, the right side, the left side, the front face side, and the back face side of the bonding machine 2 shown in Fig. 3 are the upper side, the lower side, the right side, the left side, the front side, and the back side of a bonding machine 2, respectively.

As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The bonding machine 2 is fixed on the top board 211 of the table 220.

The table 220 includes a top board 211, left and right leg portions 212, 213, left and right support portions 214, 215, and a foot holder 216. The top board 211 has a rectangular plate shape in a plan view, with the right-and-left direction as its longitudinal direction. The length of the top board 211 in the right-and-left direction is about triple the length of the bonding machine 2 in the right-and-left direction. The length of the top board 211 in the back-and-forth direction is about twice the length of the bonding machine 2 in the back-and-forth direction.

The top board 211 has an operation panel 210 on the right side of a position where the bonding machine 2 is fixed. The operation panel 210 includes a liquid crystal display (LCD) portion 207 and a plurality of keys 209. The LCD portion 207 displays various items of information thereon. The keys 209 are directed for inputting various items of information. A worker may set various operations of the cloth bonding apparatus 1 by operating the keys 209 while looking at the LCD portion 207.

The left leg portion 212 having a plate shape extends vertically downwards from the left end of the top board 211, perpendicular to the upper face of the top board 211. The right leg portion 213 having a plate shape extends vertically downwards from the right end of the top board 211, perpendicular to the upper face of the top board 211. The left support portion 214 is connected to the lower end of the left leg portion 212. The right support portion 215 is connected to the lower end of the right leg portion 213. The left support portion 214 and the right support portion 215 each are substantially prismatic members with the back-and-forth direction as a longitudinal direction.

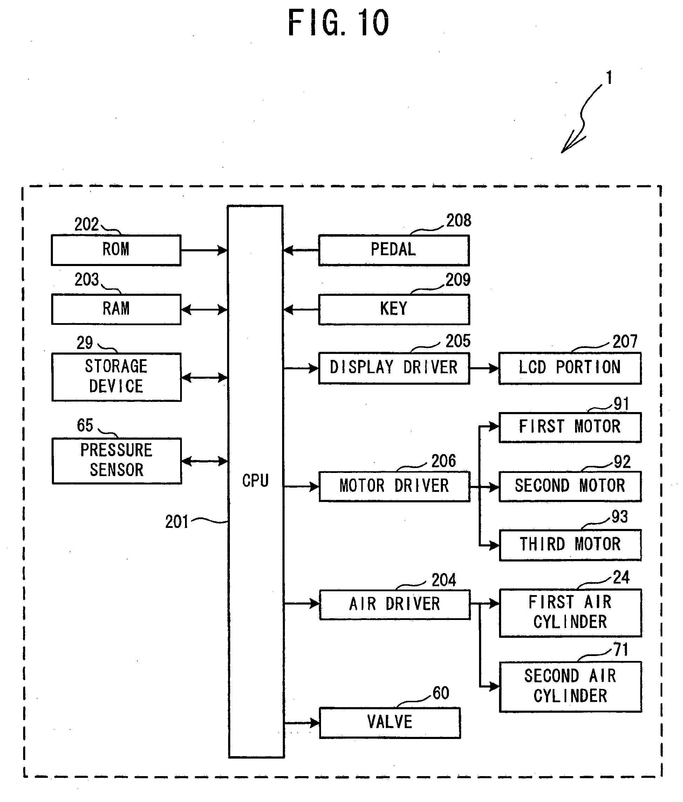

The foot holder 216 having an elongated plate shape connects the left support portion 214 and the right support portion 215 substantially at the centers thereof in the back-and-forth direction. A pedal 208 is provided substantially at the center of the foot holder 216 in the right-and-left direction. The worker may use the pedal 208 to adjust a feed speed of the cloths. A control box 3 is fixed at the lower face of the top board 211. The control box 3 stores a control substrate having a CPU 201 (refer to Fig. 10) and the like mounted thereon. The control box 3 is electrically connected to the bonding machine 2, the operation panel 210, and the pedal 208.

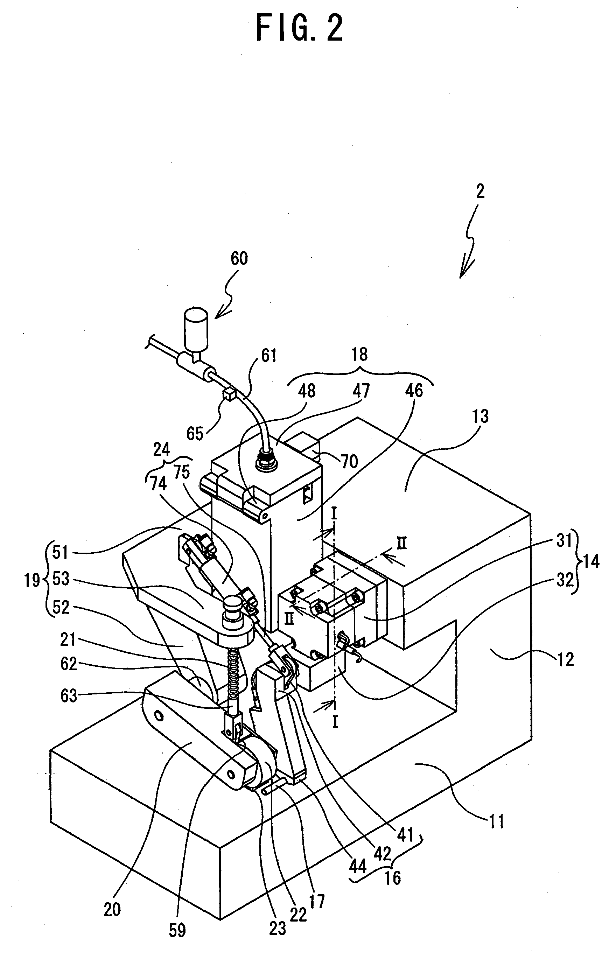

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The bed portion 11 is fixed on the top board 211 (see Fig. 1). The pillar portion 12 extends vertically upwards from the right end of the bed portion 11. The arm portion 13 is connected to the upper end of the pillar portion 12 and extends leftward from the left side of the pillar portion 12. The length of the arm portion 13 in the right-and-left direction is about one third of the length of the bed portion 11 in the right-and-left direction.

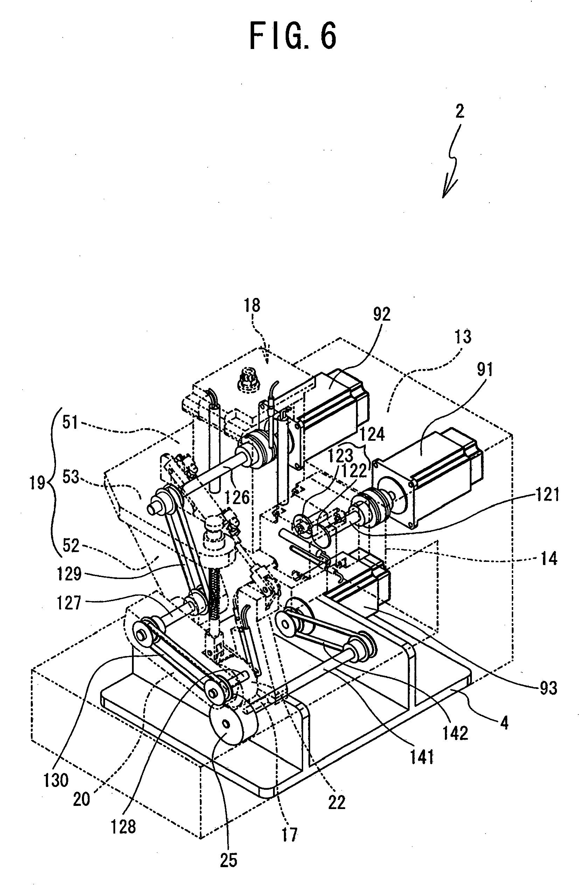

The bed portion 11 includes therein a lower feed roller 25 (refer to Fig. 6), a third motor 93 (refer to Fig. 6) and the like. The lower feed roller 25 presses and feeds cloths in conjunction with an upper feed roller 22, which will be described later. The third motor 93 drives the lower feed roller 25. The bed portion 11 functions as a base that supports the pillar portion 12. The pillar portion 12 supports the arm portion 13.

As shown in Fig. 2, the left end of the arm portion 13 supports a pump casing 14, a storage chamber 18, and a beam portion 19, from front to back in this order.
The arm portion 13 includes therein a first motor 91 (refer to Fig. 6), a second motor 92 (refer to Fig. 6) and the like. The first motor 91 drives a gear pump 124 (refer to Fig. 6). The second motor 92 drives the upper feed roller 22.

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein the gear pump 124 (refer to Fig. 6) and the like. The gear pump 124 supplies an appropriate amount of adhesive to a nozzle 17 with high accuracy. The second pump casing 32 is a substantially rectangular parallelepiped member. The second pump casing 32 extends downward from the left end portion of the lower face of the first pump casing 31. As shown in Fig. 3, the length of the first pump casing 31 in the vertical direction is substantially the same as the length of the arm portion 13 in the vertical direction. The position of the second pump casing 32 in the right-and-left direction is substantially the same as the center position of the bed portion 11 in the right-and-left direction.

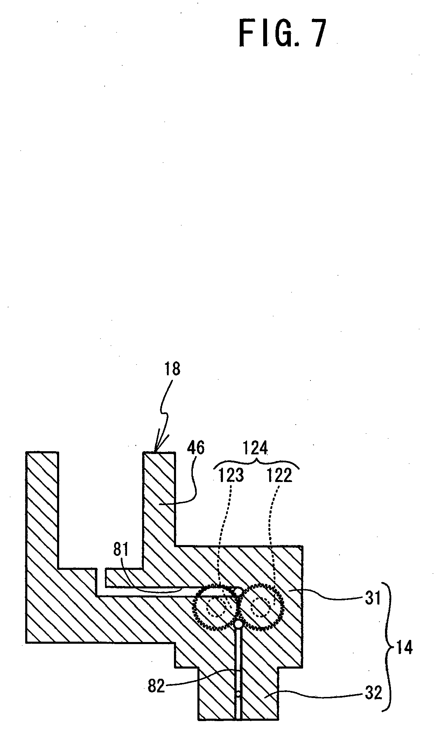

The second pump casing 32 includes a shaft portion 45 (refer to Fig. 3) on its left side. The shaft portion 45 is connected to the right side of an upper end portion 42 of a support portion 16 and swingably supports the support portion 16 about the shaft portion 45.The pump casing 14 includes a channel 81 (refer to Fig. 7) and a channel 82 (refer to Fig. 7), which will be described later. The channel 81 leads the adhesive from the storage chamber 18 to the gear pump 124. The channel 82 leads the adhesive from the gear pump 124 to the support portion 16.

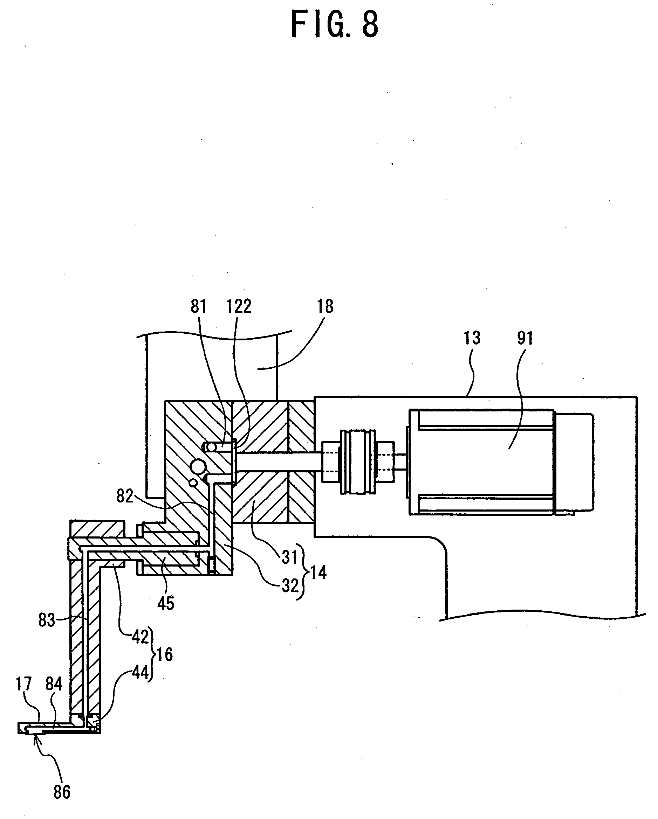

As shown in Figs. 2 and 3, the shape of the support portion 16 is substantially rectangular parallelepiped with the vertical direction as the longitudinal direction. A small gap is present between the lower end portion 44 of the support portion 16 and the bed portion 11. The support portion 16 includes therein a channel 83 (refer to Fig. 8). The channel 83 leads the adhesive from the pump casing 14 to the nozzle 17. The support portion 16 includes the nozzle 17 at the lower end portion 44. The nozzle 17 extends leftward from the support portion 16. The support portion 16 includes a drive transmitting portion 41 at the upper end portion 42. The drive transmitting portion 41 supports an end portion of a movable portion 75 of a first air cylinder 24.

The first air cylinder 24 includes air inlet ports. An intake/exhaust hose (not shown) is connected to each of the air inlet ports. The cloth bonding apparatus 1 controls an intake and an exhaust of a compressed air through the air inlet ports. The first air cylinder 24 has a piston in its body portion 74. The position of the piston moves in accordance with the intake and exhaust control. The movable portion 75 is connected to the piston. Thus, the end portion of the movable portion 75 moves back and forth along with the movement of the piston.

The support portion 16 swings back and forth about the shaft portion 45 along with the back-and-forth movement of the movable portion 75 of the first air cylinder 24. The nozzle 17 moves along with the swing of the support portion 16 to a position where the cloth bonding work is performed (a use position) and to a position where maintenance is performed (a maintenance position).

The nozzle 17 has a cylindrical shape. The nozzle 17 has a discharge port 86 (refer to Fig. 8) from which the adhesive is discharged at the bottom. When the worker performs the cloth bonding work, the discharge port 86 opposes the bed portion 11. When performing the bonding work, the worker inserts the nozzle 17 between the two layers of oppositely arranged cloths. The gear pump 124 supplies the adhesive to the nozzle 17 through the channel 83 provided inside the support portion 16. The nozzle 17 discharges the adhesive from the discharge port 86 onto the cloth. The adhesive may be applied on the surface of the lower cloth positioned below the nozzle 17.

As shown in Figs. 2 and 3, the storage chamber 18 has a substantially rectangular parallelepiped shape with the vertical direction as the longitudinal direction. The storage chamber 18 extends upward from the left side of the arm portion 13 and from the back of the pump casing 14. The storage chamber 18 includes a body portion 46, a cover portion 47, a shaft portion 48 and a lock portion 70. The body portion 46 has a bottomed tube shape having an opening at the top. The cover portion 47 covers the opening at the top of the body portion 46. The storage chamber 18 stores a hot-melt adhesive (not shown) inside the body portion 46. The storage chamber 18 includes a heater that liquefies the adhesive. The stored adhesive is supplied from the storage chamber 18 to the gear pump 124 and the nozzle 17 as needed. The hot-melt adhesive melts when heated to a predetermined temperature, and solidifies at a temperature below the predetermined temperature.

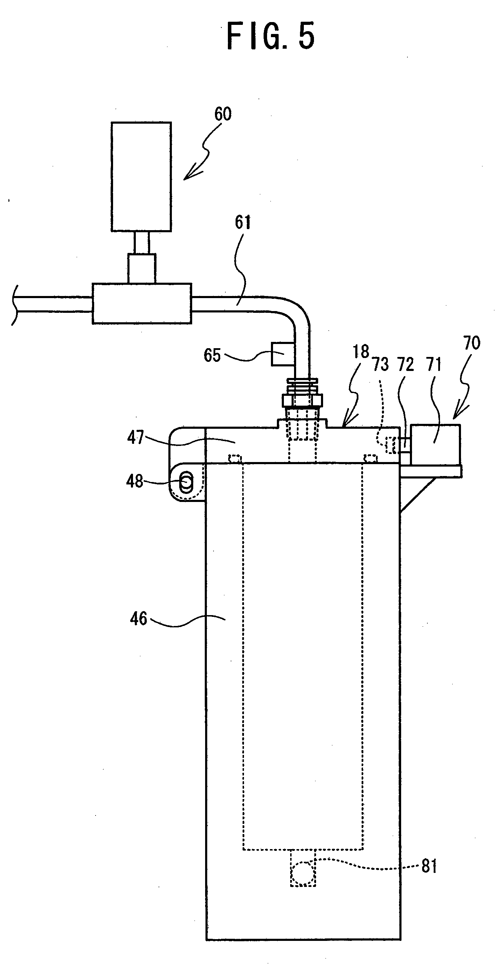

As shown in Fig. 5, the shaft portion 48, which is provided at the upper end portion of the body portion 46 on its left side, supports the cover portion 47 in an openable/closable manner. The cover portion 47 can move to a state in which the opening at the top of the body portion 46 is covered (a state in which the cover portion 47 is closed) and to a state in which the opening at the top of the body portion 46 is not covered (a state in which the cover portion 47 is open) around the shaft portion 48. The inside of the storage chamber 18 (the space enclosed by the body portion 46 and the cover portion 47) is tightly sealed when the cover portion 47 is closed.

The lock portion 70 is provided at the upper end of the body portion 46 on its right side. The lock portion 70 includes a second air cylinder 71. The position of a piston inside the second air cylinder 71 moves in accordance with an intake and an exhaust of a compressed air through the air inlet port (not shown). A movable portion 72 is connected to the piston. When the piston moves, the tip end of the movable portion 72 moves in the right-and-left direction. The movable portion 72 projects leftward from the second air cylinder 71 when moving in the left direction. The movable portion 72 enters the inside of the second air cylinder 71 when moving in the right direction.

The cover portion 47 includes a key hole 73 at its right end surface. The diameter of the key hole 73 is slightly larger than the diameter of the movable portion 72. The movable portion 72 is fitted into the key hole 73 while being moved in the left direction. The cover portion 47 is not openable in a state in which the movable portion 72 is fitted into the key hole 73. Thus, the piston of the second air cylinder 71 moves so that the cloth bonding apparatus 1 can switch a state of the cover portion 47 between an openable state and a non-openable state.

A hose 61 is connected at one end to the cover portion 47 and is connected at the other end to a compressor (not shown) as a gas supply source. A valve 60 is provided at the hose 61. The valve 60 is opened and closed thereby to adjust the amount of gas passing through the hose 61. The compressor feeds the gas via the hose 61 into the storage chamber 18. The compressor can supply a gas pressure via the hose 61 into the storage chamber 18. The compressor pushes the adhesive inside the body portion 46 through from the channel 81 provided below the body portion 46 to the outside. The pushed adhesive leads to the nozzle 17 via the gear pump 124. A pressure sensor 65 is provided on the hose 61 and in the vicinity of the portion connected to the cover portion 47. The pressure sensor 65 can detect the gas pressure inside the hose 61. Thus, the pressure sensor 65 can detect the gas pressure inside the storage chamber 18.

The CPU 201 (refer to Fig. 10) opens and closes the valve 60 provided at the hose 61. When the CPU 201 opens the valve 60 while the cover portion 47 is closed, the gas pressure supplied into the storage chamber 18.

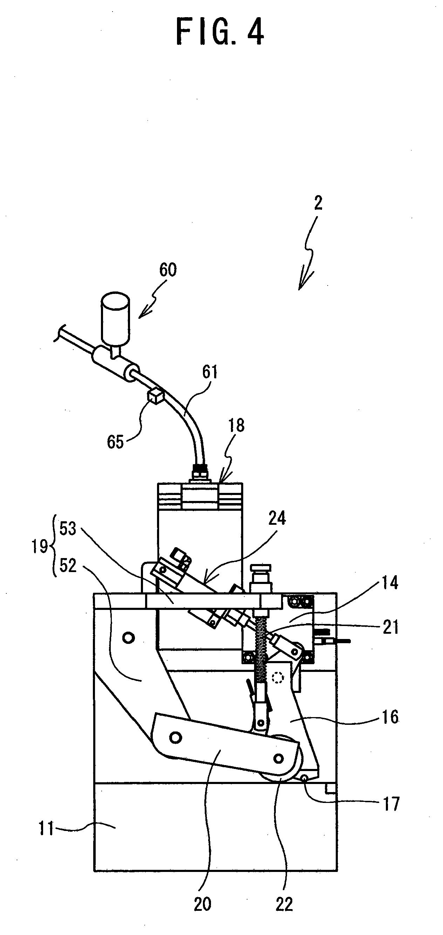

As shown in Fig. 2, the beam portion 19 includes a body portion 51, a spring support portion 53, and a column portion 52. The body portion 51 is a member extending horizontally leftward from the rear left end of the arm portion 13. The length of the body portion 51 in the right-and-left direction is about one third of the length of the bed portion 11 in the right-and-left direction. The spring support portion 53 has a plate shape and extends horizontally forward from the left end portion of the body portion 51. The length of the spring support portion 53 in the back-and-forth direction is about half the length of the bed portion 11 in the back-and-forth direction. As shown in Figs. 2 and 4, the column portion 52 extends obliquely downward from the body portion 51 at about 45 degrees relative to the horizontal plane. There is a gap between the lower end of the column portion 52 and the bed portion 11.

As shown in Fig. 2, the spring support portion 53 has a hole at the front end portion. The spring support portion 53 supports a shaft portion 63 in a vertically movable manner. The shaft portion 63 is inserted through a spring 21. The upper end part of the shaft portion 63 is inserted into the hole of the spring support portion 53. The column portion 52 has a shaft portion 62 extending horizontally leftward from the lower end part thereof. The shaft portion 62 supports a rear end portion of a roller holding portion 20. The roller holding portion 20 may swing a front end portion in the vertical direction with the shaft portion 62 as the center of swing. The body portion 51 is provided with the first air cylinder 24 at the right side of the spring support portion 53.The first air cylinder 24 is directed for switching the position of the support portion 16.

The roller holding portion 20 will be described. The front end portion of the roller holding portion 20 rotatably supports the upper feed roller 22 having a cylindrical shape. The upper feed roller 22 is positioned in the vicinity of the back of the nozzle 17 that extends from the support portion 16. The roller holding portion 20 includes a shaft support portion 59 on the upper face at a slightly forward position from the center. The shaft support portion 59 supports the lower end of the shaft portion 63 inserted through the spring 21. The spring 21 is interposed between the spring support portion 53 and the lower end of the shaft portion 63. The spring 21 urges the shaft portion 63 downwards, thereby urging the roller holding portion 20 connected to the shaft portion 63 downwards.

As shown in Fig. 2, the bed portion 11 is provided with a hole 23 below the upper feed roller 22. A part of the lower feed roller 25 (refer to Fig. 6) slightly projects upwards from the hole 23. The lower feed roller 25 rotates along with the upper feed roller 22. The lower feed roller 25 and the upper feed roller 22 feed the cloths sandwiched therebetween from front to back.

The inner configuration of the bonding machine 2 will be described below with reference to Fig. 6. The bonding machine 2 includes therein the first motor 91, the second motor 92, the third motor 93, and the like.

The first motor 91 transmits a rotation drive force to the gear pump 124 via a rotary shaft 121 thereby driving the gear pump 124. The gear pump 124 includes a drive gear 122 and a driven gear 123. The drive gear 122 is fixed at the left end of the rotary shaft 121. The drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the upper feed roller 22 via the rotary shafts 126, 127, 128 and belts 129, 130 thereby driving the upper feed roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley. The right end of the rotary shaft 127 is positioned inside the lower end of the column portion 52 and the left end of the rotary shaft 127 is positioned inside the rear end portion of the roller holding portion 20. The right end and left end of the rotary shaft 127 each support a pulley. The rotary shaft 128 is a rotary shaft of the upper feed roller 22. The left end of the rotary shaft 128 is positioned inside the front end portion of the roller holding portion 20 and supports a pulley. The right end of the rotary shaft 128 projects from the front end portion of the roller holding portion 20 and supports the upper feed roller 22. The belt 129 is crossed between the pulley at the left end of the rotary shaft 126 and the pulley at the right end of the rotary shaft 127 inside the column portion 52. The belt 130 is crossed between the pulley at the left end of the rotary shaft 127 and the pulley at the left end of the rotary shaft 128 inside the roller holding portion 20. The upper feed roller 22 rotates along with the rotation of the second motor 92.

The third motor 93 transmits a rotation drive force to the lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 22 and inside the bed portion 11. The bed portion 11 has a support portion 4 therein. The support portion 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93.

The channels for the adhesive in the bonding machine 2 will be described with reference to Figs. 7 and 8. As shown in Fig. 7, the body portion 46 stores an adhesive within a space enclosed by the peripheral wall and the bottom wall. The channel 81 is a through hole extending toward the pump casing 14 below the bottom wall of the pump casing 14 side. The channel 81 is a channel for leading the adhesive stored in the body portion 46 to the gear pump 124.

The channel 81 leads from the storage chamber 18 to the center of the inside of the first pump casing 31 of the pump casing 14. The channel 81 bends to the right at a right angle at the center of the first pump casing 31 and leads to the upper end of a portion where the drive gear 122 and the driven gear 123 are meshed with each other.

As shown in Fig. 8, the channel 82 is a passage that guides the adhesive passing through the gear pump 124 to the channel 83 of the support portion 16. The channel 82 extends leftward from the lower end of the portion where the drive gear 122 and the driven gear 123 (refer to Fig. 7) are meshed with each other. The channel 82 extending leftward bends downward, bends to the left at its lower end, passes through the shaft portion 45 and then leads to the channel 83 inside the support portion 16.

The channel 83 is a passage that guides the adhesive flowing through the channel 82 to the nozzle 17. The channel 83 extends from the upper end 42 to the lower end 44 inside the support portion 16 and leads to the channel 84 inside the nozzle 17.

The channel 84 is a passage that guides the adhesive flowing through the channel 83 to the discharge port 86. The discharge port 86 is provided below the left end of the nozzle 17. The channel 84 extends from the right end to the left end inside the nozzle 17 and is connected to the discharge port 86. The adhesive is discharged from the discharge port 86 to the outside.

There will be described how the adhesive flows from the storage chamber 18 via the pump casing 14 and the support portion 16 to the discharge port 86 of the nozzle 17 with reference to Figs. 7 and 8. The first motor 91 drives the drive gear 122 so that the drive gear 122 and the driven gear 123 rotate. The gear pump 124 feeds the liquid adhesive from the channel 81 toward the channel 82. The adhesive flows from the channel 82 toward the channel 83, leads to the channel 84, and is discharged from the discharge port 86 to the outside.

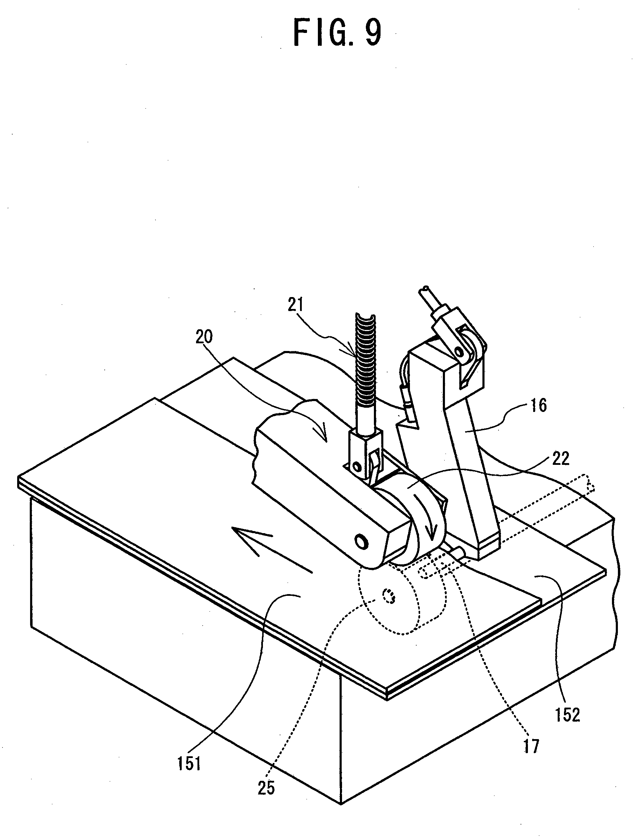

There will be described how the bonding machine 2 operates during the bonding operation of bonding an upper cloth 151 and a lower cloth 152 with reference to Fig. 9. When performing the bonding operation, the bonding machine 2 moves the movable portion 75 (refer to Fig. 2) of the first air cylinder 24 (refer to Fig. 2) ahead and moves the support portion 16 to the use position. The worker places the upper cloth 151 on the lower cloth 152. The worker places the nozzle 17 at a portion where the cloths are to be bonded. The upper feed roller 22 and the lower feed roller 25 sandwich the upper cloth 151 and the lower cloth 152 behind the nozzle 17.

The cloth bonding apparatus 1 closes the cover portion 47 (refer to Fig. 5) and opens the valve 60 (refer to Fig. 5). The compressor supplies the gas pressure into the storage chamber 18 (refer to Fig. 5). The compressor pushes the adhesive stored in the body portion 46 (refer to Fig. 5) via the channel 81 (refer to Fig. 5) to the gear pump 124 (refer to Fig. 7).

When the worker steps on and presses down the pedal 208 (refer to Fig. 1) in the aforementioned state, the gear pump 124 (refer to Fig. 7) is driven. The adhesive flows through the channels 81 to 83 (refer to Figs. 7 and 8), is discharged from the nozzle 17 and adheres onto the lower cloth 152. The upper feed roller 22 and the lower feed roller 25 rotate to feed the upper cloth 151 and the lower cloth 152 from front to back. The spring 21 urges the upper feed roller 22 downwards. Thus, the upper feed roller 22 and the lower feed roller 25 press and bond the upper cloth 151 and the lower cloth 152 together.

An electrical configuration of the cloth bonding apparatus 1 will be described with reference to Fig. 10. The cloth bonding apparatus 1 includes a CPU 201, a ROM 202, a RAM 203, and a storage device 29. The CPU 201 performs reception processing and control processing. The reception processing is a processing for receiving input information from the key 209, the pedal 208, and the like. The reception processing is also a processing for receiving information detected by the various sensors. The control processing is a processing for controlling the motors and the like. The ROM 202 stores programs to be executed by the CPU 201 and various default parameters and the like. The RAM 203 temporarily stores timers, counters, flags, and the like. The storage device 29 stores various setting information inputted by the worker. The CPU 201 is electrically connected to the ROM 202, the RAM 203, and the storage device 29, respectively. The CPU 201 can access storage areas of the ROM 202, the RAM 203, and the storage device 29.

The pedal 208 is electrically connected with the CPU 201. The worker may use the pedal 208 to adjust the feed speed of the cloths. The CPU 201 recognizes an amount by which the pedal 208 is pressed down (hereinafter referred to as an adjustment amount). The CPU 201 determines a rotation speed of the upper feed roller 22 and the lower feed roller 25, and rotation speed of the drive gear 122 and the driven gear 123, on the basis of the recognized adjustment amount of the pedal 208.

The keys 209 are electrically connected with the CPU 201. The worker may use the keys 209 to enter various operation settings. The CPU 201 recognizes the press state of the keys 209 operated by the worker. The CPU 201 stores the information inputted by the worker in the storage device 29, on the basis of the recognized press state of the keys 209.

A display driver 205 is electrically connected with the CPU 201. The LCD portion 207 is electrically connected with the display driver 205. The CPU 201 displays desired information on the LCD portion 207 via the display driver 205.

A motor driver 206 is electrically connected with the CPU 201. The motors 91 to 93 each are electrically connected with the motor driver 206. The CPU 201 controls the motors 91 to 93 via the motor driver 206.

An air driver 204 is electrically connected to the CPU 201. The air driver 204 is electrically connected to the air cylinders 24 and 71. The CPU 201 controls the air pressure to be fed into the air inlet ports of the air cylinders 24 and 71 via the air driver 204. The support portion 16 moves to the use position or to the maintenance position on the basis of the operation of the first air cylinder 24. The lock portion 70 switches the state of the cover portion 47 between the openable state and the non-openable state based on the operation of the second air cylinder 71.

The valve 60 is electrically connected to the CPU 201. The CPU 201 can open and close the valve 60.

The pressure sensor 65 is electrically connected to the CPU 201. The CPU 201 can recognize the gas pressure detected by the pressure sensor 65.

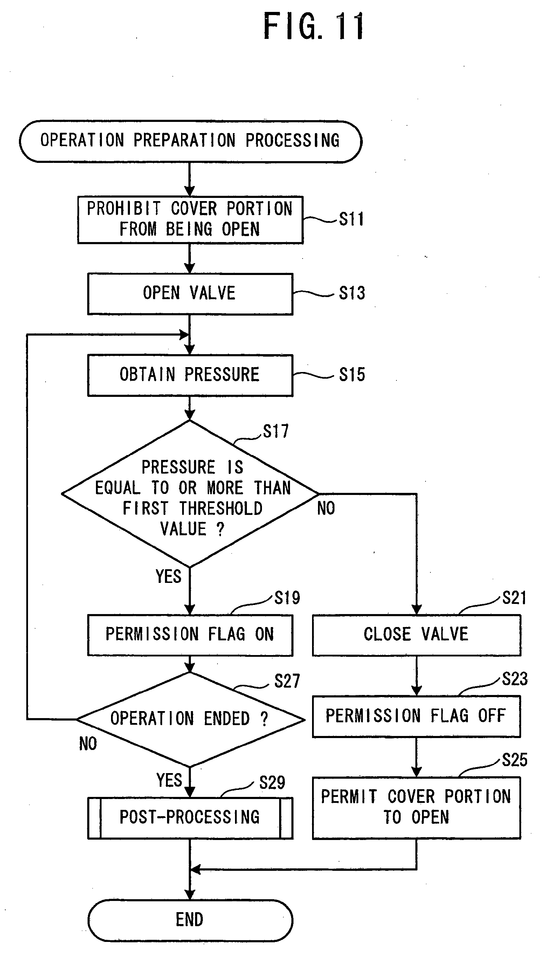

Various processing (operation preparation processing and bond processing) will be described with reference to Figs. 11 to 13. The compressor (not shown) always operates. A flag to be used by the CPU 201 will be described. A permission flag indicates whether the driving of the gear pump 124 is enabled or disabled. The CPU 201 stores "1" in the permission flag when the gear pump 124 is permitted to drive. The CPU 201 stores "0" in the permission flag when the gear pump 124 is prohibited from driving. That the CPU 201 stores "1" in the permission flag is referred to as that "the permission flag is made ON". That the CPU 201 stores "0" in the permission flag is referred to as that "the permission flag is made OFF". The RAM 203 stores the permission flag therein.

The CPU 201 performs the operation preparation processing and the bond processing at a predetermined cycle (such as 1ms), respectively. The CPU 201 interrupts one of the processing that is being executed when an execution timing of the other processing arrives. Then the CPU 201 performs the other processing. The CPU 201 interrupts the ongoing processing, and restarts the processing from the interrupted points when the execution timing arrives. Thus, the CPU 201 can perform both the processings in parallel.

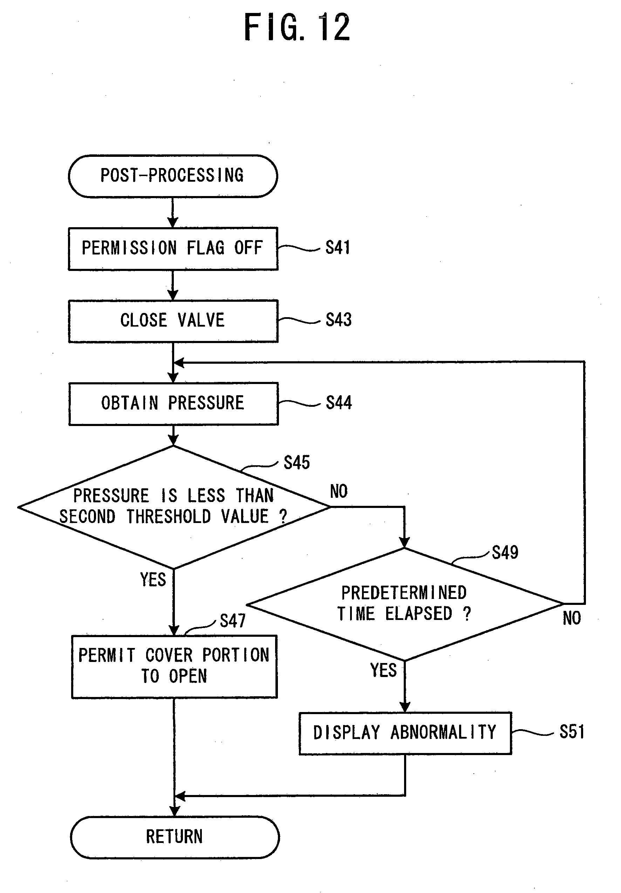

The operation preparation processing will be described with reference to Figs. 11 and 12. When the worker operates the key 209 to start the cloth bonding operation, the CPU 201 performs the operation preparation processing.

The CPU 201 moves the piston of the second air cylinder 71 and moves the movable portion 72 leftwards. The movable portion 72 projects leftwards from the second air cylinder 71. The movable portion 72 is fitted into the key hole 73. The cover portion 47 enters the non-openable state (S11).

The CPU 201 opens the valve 60 (S 13). The gas fed by the compressor enters the storage chamber 18 via the hose 61. The CPU 201 obtains the gas pressure detected by the pressure sensor 65 (S 15). The CPU 201 compares the obtained gas pressure with a first threshold value (S 17).

The obtained gas pressure is equal to or more than the first threshold value when the cover portion 47 is closed and the storage chamber 18 is tightly sealed (S17: YES). The gas pressure supplied by the compressor pushes the adhesive stored in the body portion 46 to the channel 81. The gear pump 124 can supply an appropriate amount of the adhesive to the nozzle 17. The CPU 201 makes the permission flag ON (S19).

The CPU 201 determines whether the worker operated the key 209 to end the bonding operation (S27). When the worker has operated the key 209 to end the bonding operation (S27: YES), the CPU 201 performs the post-processing (S29, refer to Fig. 12). The CPU 201 terminates the operation preparation processing after ending the post-processing. When the worker has not operated the key 209 to end the bonding operation (S27: NO), the CPU 201 returns to the processing in S15. The CPU 201 repeatedly performs the above processings.

The post-processing will be described with reference to Fig. 12. The CPU 201 makes the permission flag OFF (S41). The CPU 201 closes the valve 60 (S43) and stops supplying the gas pressure into the storage chamber 18. The CPU 201 obtains the gas pressure detected by the pressure sensor 65 (S44). The CPU 201 compares the obtained gas pressure with a second threshold value (S45).

Since the valve 60 is closed in the processing in step S43, the gas pressure inside the storage chamber 18 gradually decreases. When the obtained gas pressure is equal to or more than the second threshold value (S45: NO), the CPU 201 monitors an elapsed time after the valve 60 is closed (S49). When the elapsed time is less than a predetermined time (S49: NO), the CPU 201 returns to the processing in step S44. When the elapsed time is equal to or more than the predetermined time in step S49 (S49: YES), the CPU 201 displays a screen that notifies the worker of the fact that an abnormality has occurred on the LCD portion 207 (S51). The CPU 201 terminates the post-processing. The CPU 201 returns to the operation preparation processing (refer to Fig. 11).

When the obtained gas pressure is less than the second threshold value (S45: YES), the gas pressure inside the storage chamber 18 has decreased. The CPU 201 moves the movable portion 72 rightwards. The movable portion 72 enter inside of the second air cylinder 71. The cover portion 47 enters the openable state (S47). The CPU 201 terminates the post-processing. The CPU 201 returns to the operation preparation processing (refer to Fig. 11).

As shown in Fig. 11, when the obtained gas pressure is less than the first threshold value (S17: NO), the gas pressure supplied by the compressor cannot push the adhesive stored in the body portion 46 to the channel 81. An appropriate amount of adhesive can not be discharged from the nozzle 17 even if the gear pump 124 is driven. Thus, the CPU 201 closes the valve 60 (S21). The CPU 201 makes the permission flag OFF (S23). The CPU 201 moves the movable portion 72 rightwards. The movable portion 72 enters inside of the second air cylinder 71. The cover portion 47 enters the openable state (S25). The CPU 201 terminates the operation preparation processing.

As described above, when the storage chamber 18 is tightly sealed, the cloth bonding apparatus 1 permits the gear pump 124 to drive and prohibits the cover potion 47 from being open. Thus, the cloth bonding apparatus 1 can prevent the gas pressure from decreasing due to the opened cover portion 47 during the bonding operation. The cloth bonding apparatus 1 can prevent that the sufficient gas pressure cannot be supplied into the storage chamber 18 and an appropriate amount of the adhesive cannot be discharged from the nozzle 17. When the cover portion 47 is not closed and the sufficient gas pressure is not supplied into the storage chamber 18, the cloth bonding apparatus 1 prohibits the gear pump 124 from driving. Thus, the cloth bonding apparatus 1 can operate such that the gas pressure is not supplied into the storage chamber 18 while the cover portion 47 is open.

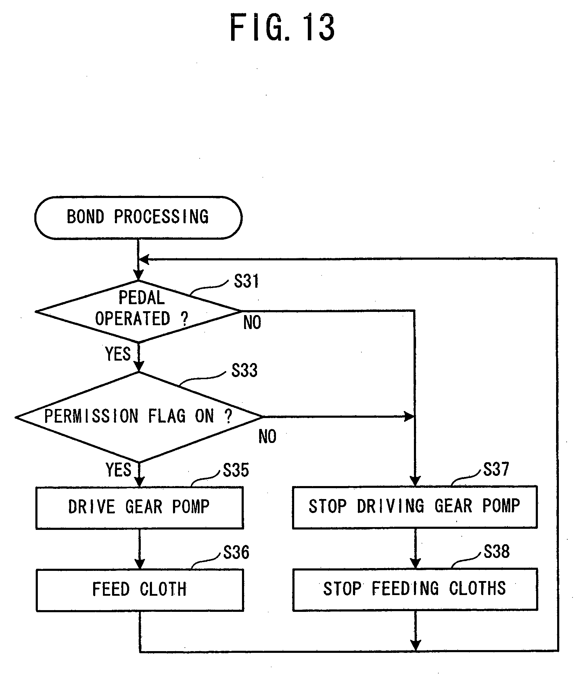

The bond processing will be described with reference to Fig. 13. When the worker powers ON the cloth bonding apparatus 1, the CPU 201 performs the bond processing.

The CPU 201 determines whether the worker has stepped on and pressed down the pedal 208 (S31). When the worker has not stepped on and pressed down the pedal 208 (S31: NO), the CPU 201 stops driving the gear pump 124 (S37). The adhesive is not discharged from the nozzle 17. The upper feed roller 22 and the lower feed roller 25 stop rotating thereby to stop feeding the cloths (S38). The CPU 201 returns to the processing in step S31. The CPU 201 continuously monitors the state of the pedal 208.

The worker places the cloths in the bonding machine 2 and steps on and presses down the pedal 208. The CPU 201 detects the stepping and pressing of the pedal 208 (S31: YES). The CPU 201 determines whether the permission flag is ON (S33). When the permission flag is OFF (S33: NO), the CPU 201 stops driving the gear pump 124 (S37). The adhesive is not discharged from the nozzle 17. The upper feed roller 22 and the lower feed roller 25 stop rotating thereby to stop feeding the cloths (S38). The CPU 201 returns to the processing in step S31.

When the permission flag is ON (S33: YES), the gear pump 124 can be driven to supply the adhesive to the nozzle 17 and to discharge the adhesive from the nozzle 17. The CPU 201 sets the rotation speed of the gear pump 124 based on the amount by which the pedal 208 is stepped on and pressed down by the worker. The CPU 201 drives the rotation of the first motor 91. The first motor 91 drives the gear pump 124 (S35). The CPU 201 drives the rotation of the second motor 92 and the third motor 93. The upper feed roller 22 and the lower feed roller 25 rotate to feed the cloths (S36). The CPU 201 returns to the processing in step S31.

The gear pump 124 supplies the adhesive to the nozzle 17. The adhesive is discharged from the discharge port 86. The discharged adhesive adheres on the cloth. The upper feed roller 22 and the lower feed roller 25 press the cloths in the vertical direction and feed the cloths from front to back. Thus, the cloths are bonded together.

As described above, when the gas pressure inside the storage chamber 18 is equal to or more than the predetermined first threshold value, the cloth bonding apparatus 1 according to the first embodiment permits the gear pump 124 to drive. When the gas pressure inside the storage chamber 18 is less than the first threshold value, the cloth bonding apparatus 1 can prohibit the gear pump 124 from driving thereby to prohibit the adhesive from being discharged. Thus, the cloth bonding apparatus 1 can prevent a failure that the adhesive is discharged from the nozzle 17 while the gas pressure into the storage chamber 18 is insufficiently supplied. The cloth bonding apparatus 1 can prevent a failure that an appropriate amount of the adhesive is not discharged.

When the gas pressure inside the storage chamber 18 is less than the first threshold value, the cloth bonding apparatus 1 can prohibit the cloths from being fed since the upper feed roller 17 and the lower feed roller 25 do not rotate. Thus, the cloth bonding apparatus 1 can prevent that the cloths are fed and the bonding operation is performed while an appropriate amount of the adhesive is not discharged.

When the gas pressure inside the storage chamber 18 is less than the first threshold value, the cloth bonding apparatus 1 closes the valve 60 thereby to stop feeding the gas. Thus, the cloth bonding apparatus 1 can prevent the gas from being continuously fed while the storage chamber 18 is not tightly sealed. The first threshold value and the second threshold value may be the same. The gas supply source may be an air source piped in a factory.

The cloth bonding apparatus 1 prohibits the cover portion 47 from being open while the gas pressure is being supplied into the storage chamber 18. Thus, the cloth bonding apparatus 1 operates such that the worker cannot open the cover portion 47 during the bonding operation.

### <Second embodiment>

A second embodiment will be described. Same reference numerals are denoted to the same parts as the first embodiment and the description thereof will be omitted.

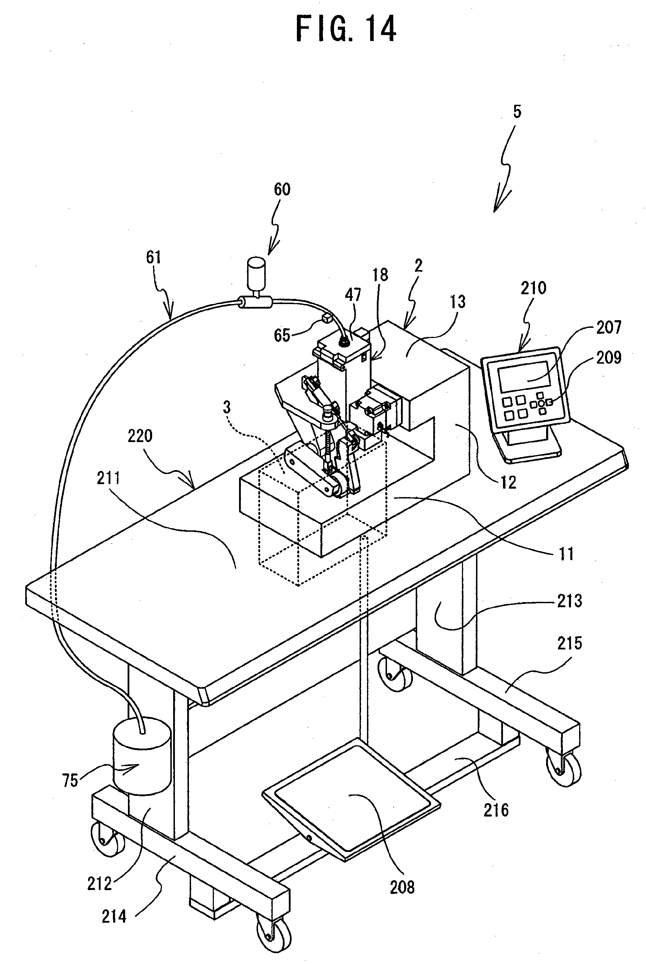

A configuration of a cloth bonding apparatus 5 will be described with reference to Fig. 14. The cloth bonding apparatus 5 includes a compressor 75. The compressor 75 has a substantially cylindrical shape with the vertical direction as the longitudinal direction. The compressor 75 is provided on the left side of the leg 212 of the table 220. The hose 61 is connected at one end to the top of the compressor 75. The hose 61 is connected at the other end to the cover portion 47 of the storage chamber 18. The compressor 75 feeds the gas into the storage chamber 18 via the hose 61. The compressor 75 can supply the gas pressure into the storage chamber 18 via the hose 61. The CPU 201 can electrically control the operation of the compressor 75.

The valve 60 is provided at the hose 61. The valve 60 is opened and closed thereby to adjust an amount of the gas passing through the hose 61. The pressure sensor 65 can detect a gas pressure inside the hose 61. The pressure sensor 65 is provided on the hose 61 and near the portion connected to the cover portion 47. Thus, the pressure sensor 65 can detect the gas pressure inside the storage chamber 18.

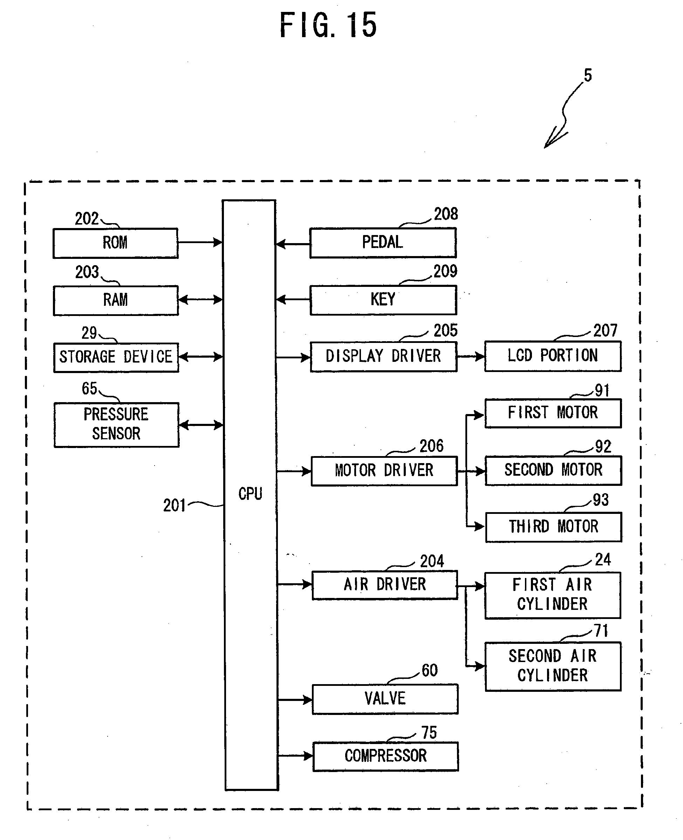

The electrical configuration of the cloth bonding apparatus 5 will be described with reference to Fig. 15. The second embodiment is different from the first embodiment in that the compressor 75 is provided. The compressor 75 is electrically connected to the CPU 201. The CPU 201 can control the operation of the compressor 75.

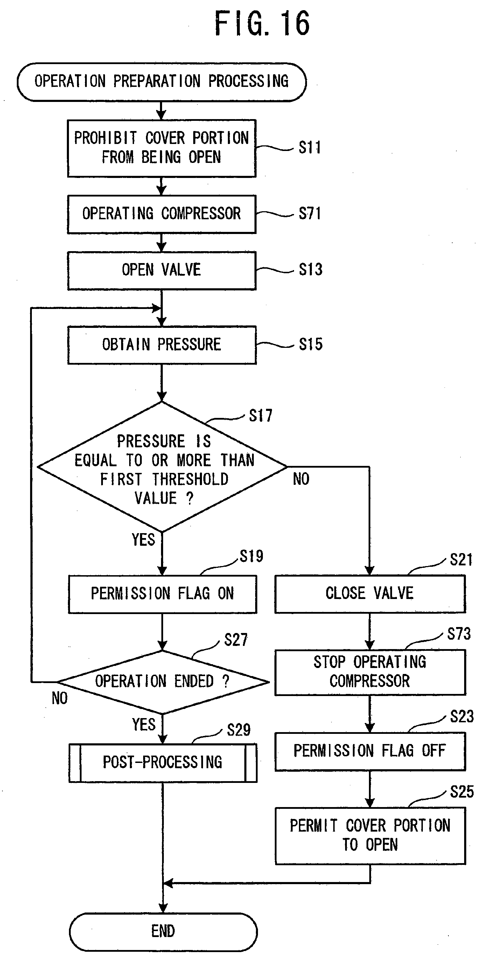

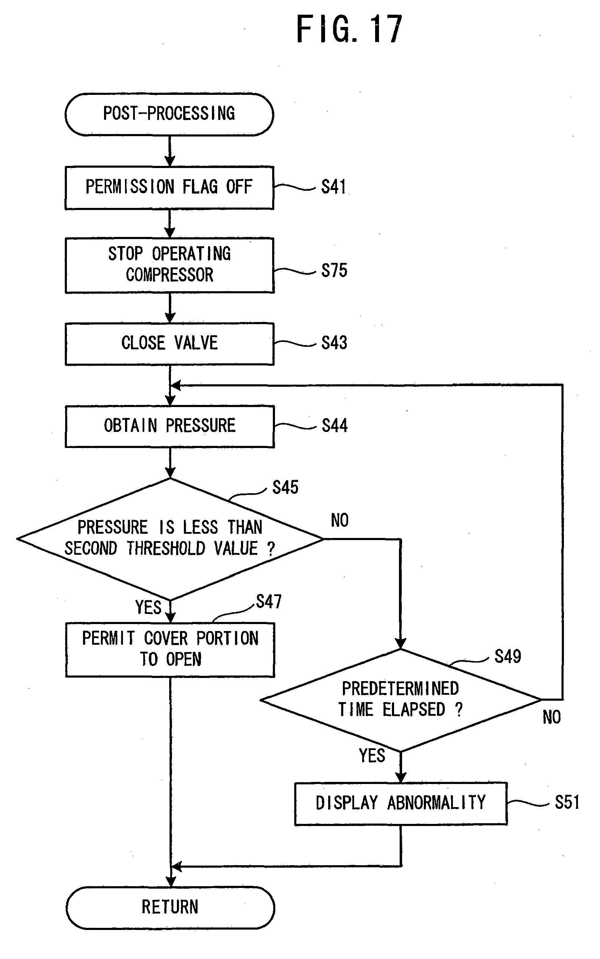

The operation preparation processing of the cloth bonding apparatus 5 will be described with reference to Figs. 16 and 17.

Fig. 16 is different from Fig. 11 in that the processing in step S71 is added between step S11 and step S 13 and the processing of step S73 is added between step S21 and step S23. In step S71, the CPU 201 starts the operation of the compressor 75 after the cover portion 47 enters the non-openable state (S71). In step S73, when the gas pressure detected by the pressure sensor 65 is less than the first threshold value (S17: NO), the CPU 201 closes the valve 60 (S21) and stops the operation of the compressor 75 (S73).

Fig. 17 is different from Fig. 12 in that the processing of step S75 of stopping the operation of the compressor 75 is added between step S41 and step S43. In step S75, the CPU 201 stops the operation of the compressor 75 (S75) after the permission flag is made OFF (S41).

As described above, the cloth bonding apparatus 5 according to the second embodiment performs the open/close control of the valve 60 and the operation control of the compressor 75. The cloth bonding apparatus 5 controls the compressor 75 thereby to stop feeding the gas into the storage chamber 18. The cloth bonding apparatus 5 controls the compressor 75 thereby to stop feeding the gas when the gas pressure inside the storage chamber 18 is less than the first threshold value. The cloth bonding apparatus 5 can control the gas pressure inside the storage chamber 18 by controlling the compressor 75 even when the valve 60 fails.

The present invention is not limited to the first embodiment and second embodiment described above, but is only limited by the claims, such that various modifications may be made to the embodyment. In the above-described embodiment, the second air cylinder 71 moves the movable portion 72 so that the cover portion 47 is switched between the openable state and the non-openable state. For example, the second air cylinder 71 may be provided at the cover portion 47 and the movable portion may be connected to the piston of the second air cylinder 71. The cloth bonding apparatus 1 may switch the cover portion 47 between the openable state and the non-openable state by moving the piston of the second air cylinder 71 provided at the cover portion 47.

In the above-described second embodiment, the cloth bonding apparatus 5 controls the opening/closing of the valve 60 and the operation of the compressor 75 thereby to control the supplying of the gas pressure into the storage chamber 18. The present invention is not limited to the configuration and method. The cloth bonding apparatus 5 may not include the valve 60. The gas pressure inside the storage chamber 18 can be controlled even by controlling only the operation of the compressor 75, thereby obtaining the similar effects to the above effects.

The compressor 75 of Fig. 14 corresponds to the "gas supply source" according to the present invention. The valve 60, the hose 61 in Fig. 2 correspond to the "gas supply portion" according to the present invention. The pressure sensor 65 of Fig. 2 corresponds to the "sensor" according to the present invention. The gear pump 124 of Fig. 6 corresponds to the "adhesive supply portion" according to the present invention. The CPU 201 that performs the processing in S35, S37 of Fig. 13 corresponds to the "adhesive supply controlling portion" according to the present invention. The upper feed roller 17 and the lower feed roller 25 of Fig. 6 correspond to the "feeding portion" according to the present invention. The second motor 92 and the third motor 93 of Fig. 6 correspond to the "driving portion" according to the present invention. The CPU 201 that performs the processings in S36 and S38 of Fig. 13 corresponds to the "drive controlling portion" according to the present invention. The CPU 201 that performs the processings in S13, S21 of Fig. 11, S43 of Fig. 12, S71, S73 of Fig. 16 and S75 of Fig. 17 corresponds to the "gas supply controlling portion" according to the present invention.

Examples in which the cloth bonding apparatus bonds separate pieces of cloths together are given in the above-described embodiment and the modified embodiment. However, the cloth bonding apparatus may bond folded portions of one folded cloth.
In other words, the cloth bonding apparatus may bond two layers of cloth(s).

## Claims

1. A cloth bonding apparatus comprising:
a storage chamber (18) adapted to store an adhesive therein;
a gas supply portion (60,61) adapted to supply a gas into the storage chamber thereby to push the adhesive inside the storage chamber to a downstream side;
a sensor (65) that detects a gas pressure inside the storage chamber;
an adhesive supply portion (124) adapted to supply the adhesive pushed out of the storage chamber by the gas supply portion to a nozzle (17); and
an adhesive supply controlling portion (201) that controls the adhesive supply portion,
wherein when the gas pressure detected by the sensor is less than a predetermined value, the adhesive supply controlling portion controls the adhesive supply portion to stop supplying the adhesive.

2. The cloth bonding apparatus according to claim 1, further comprising:
a feeding portion (22, 25) adapted to press cloths and feed a first layer of cloth with a second layer of cloth in a direction intersecting with a direction in which the adhesive is discharged from the nozzle;
a driving portion (92, 93) that drives the feeding portion; and
a drive controlling portion (201) that controls the driving portion,
wherein when the gas pressure detected by the sensor is less than the predetermined value, the drive controlling portion controls the driving portion to stop feeding the cloth.

3. The cloth bonding apparatus according to claim 1 or 2, further comprising:
a gas supply controlling portion that controls the gas supply portion to supply or stop supplying the gas into the storage chamber,
wherein when the gas pressure detected by the sensor is less than the predetermined value, the gas supply controlling portion controls the gas supply portion to stop supplying the gas into the storage chamber.

4. The cloth bonding apparatus according to claim 3, wherein:
the gas supply portion includes:
a channel (61) that connects the storage chamber to a gas supply source (75) for supplying the gas; and
a valve (60) that is provided in the channel and that can be opened and closed to control the gas pressure inside the storage chamber, and
when the gas pressure detected by the sensor is less than the predetermined value, the gas supply controlling portion closes the valve.

5. The cloth bonding apparatus according to claim 4, wherein:
the gas supply source includes a compressor (75); and
when the gas pressure detected by the sensor is less than the predetermined value, the gas supply controlling portion controls the compressor to stop supplying the gas into the storage chamber.

## Patentansprüche

1. Tuchfügegerät mit:
einer Speicherkammer (18), die daran angepasst ist, darin ein Klebemittel zu speichern;
einem Gaszuführabschnitt (60, 61), der daran angepasst ist, ein Gas in die Speicherkammer zuzuführen, um dadurch das Klebemittel im Inneren der Speicherkammer zu einer stromabwärtigen Seite zu drücken;
einem Sensor (65), der einen Gasdruck im Inneren der Speicherkammer erfasst;
einem Klebemittelzuführabschnitt (124), der daran angepasst ist, das aus der Speicherkammer durch den Gaszuführabschnitt herausgedrückte Klebemittel zu einer Düse (17) zuzuführen; und
einem Klebemittelzuführsteuerabschnitt (201), der den Klebemittelzuführabschnitt steuert,
wobei der Klebemittelzuführsteuerabschnitt den Klebemittelzuführabschnitt zum Stoppen der Zufuhr des Klebemittels steuert, wenn der durch den Sensor erfasste Gasdruck kleiner ist als ein vorbestimmter Wert.

2. Tuchfügegerät gemäß Anspruch 1, des Weiteren mit:
einem Vorschubabschnitt (22, 25), der daran angepasst ist, Tuche zu drücken und eine erste Tuchlage mit einer zweiten Tuchlage in einer Richtung vorzuschieben, die eine Richtung schneidet, in der das Klebemittel aus der Düse ausgelassen wird;
einem Antriebsanschnitt (92, 93), der den Vorschubabschnitt antreibt; und
einem Antriebssteuerabschnitt (201), der den Antriebsabschnitt steuert,
wobei der Antriebssteuerabschnitt den Antriebsabschnitt zum Stoppen des Vorschiebens des Tuches steuert, wenn der durch den Sensor erfasste Gasdruck kleiner ist als der vorbestimmte Wert.

3. Tuchfügegerät gemäß Anspruch 1 oder 2, des Weiteren mit:
einem Gaszuführsteuerabschnitt, der den Gaszuführabschnitt zum Zuführen oder zum Stoppen der Zufuhr des Gases in die Speicherkammer steuert,
wobei der Gaszuführsteuerabschnitt den Gaszuführabschnitt zum Stoppen der Zufuhr des Gases in die Speicherkammer steuert, wenn der durch den Sensor erfasste Gasdruck kleiner ist als der vorbestimmte Wert.

4. Tuchfügegerät gemäß Anspruch 3, wobei:
der Gaszuführabschnitt folgendes aufweist:
einen Kanal (61), der die Speicherkammer mit einer Gaszuführquelle (75) zum Zuführen des Gases verbindet; und
ein Ventil (60), das in dem Kanal vorgesehen ist und das geöffnet und geschlossen werden kann, um den Gasdruck im Inneren der Speicherkammer zu steuern, und
wenn der durch den Sensor erfasste Gasdruck kleiner ist als der vorbestimmte Wert, schließt der Gaszuführsteuerabschnitt das Ventil.

5. Tuchfügegerät gemäß Anspruch 4, wobei:
die Gaszuführquelle einen Kompressor (75) aufweist; und
wenn der durch den Sensor erfasste Gasdruck kleiner ist als der vorbestimmte Wert, steuert der Gaszuführsteuerabschnitt den Kompressor zum Stoppen der Zufuhr des Gases in die Speicherkammer.

## Revendications

1. Dispositif de soudage de tissu comprenant :
une chambre de stockage (18) adaptée de manière à stocker un adhésif à l'intérieur ;
une partie d'alimentation en gaz (60, 61) adaptée de manière à délivrer un gaz dans la chambre de stockage, poussant ainsi l'adhésif à l'intérieur de la chambre de stockage vers un côté aval ;
un capteur (65) qui détecte une pression de gaz à l'intérieur de la chambre de stockage ;
une partie d'alimentation d'adhésif (124) adaptée de manière à délivrer l'adhésif, poussé hors de la chambre de stockage par la partie d'alimentation en gaz, à un injecteur (17) ; et
une partie de commande d'alimentation d'adhésif (201) qui commande la partie d'alimentation d'adhésif,
dans lequel, lorsque la pression de gaz détectée par le capteur est inférieure à une valeur prédéterminée, la partie de commande d'alimentation d'adhésif commande la partie d'alimentation d'adhésif de manière à arrêter l'alimentation de l'adhésif.

2. Dispositif de soudage de tissu selon la revendication 1, comprenant en outre :
une partie d'introduction (22, 25) adaptée de manière à presser des tissus et à délivrer une première couche de tissu avec une seconde couche de tissu suivant une direction coupant une direction suivant laquelle l'adhésif est distribué à partir de l'injecteur ;
une partie d'entraînement (92, 93) qui entraîne la partie d'introduction ; et
une partie de commande d'entraînement (201) qui commande la partie d'entraînement,
dans lequel lorsque la pression de gaz détectée par le capteur est inférieure à la valeur prédéterminée, la partie de commande d'entraînement commande la partie d'entraînement de manière à arrêter l'introduction du tissu.

3. Dispositif de soudage de tissu selon la revendication 1 ou 2, comprenant en outre :
une partie de commande d'alimentation de gaz qui commande la partie d'alimentation en gaz afin d'assurer ou d'arrêter l'alimentation en gaz dans la chambre de stockage,
dans lequel, lorsque la pression de gaz détectée par le capteur est inférieure à la valeur prédéterminée, la partie de commande d'alimentation de gaz commande la partie d'alimentation en gaz de manière à arrêter l'alimentation de gaz dans la chambre de stockage.

4. Dispositif de soudage de tissu selon la revendication 3, dans lequel :
la partie d'alimentation en gaz comporte :
un canal (61) qui raccorde la chambre de stockage à une source d'alimentation en gaz (75) de manière à délivrer le gaz ; et
une vanne (60) qui est agencée sur le canal et qui peut être ouverte et fermée afin de commander la pression de gaz à l'intérieur de la chambre de stockage, et
lorsque la pression de gaz détectée par le capteur est inférieure à la valeur prédéterminée, la partie de commande d'alimentation de gaz ferme la vanne.

5. Dispositif de soudage de tissu selon la revendication 4, dans lequel :
la source d'alimentation en gaz comporte un compresseur (75) ; et
lorsque la pression de gaz détectée par le capteur est inférieure à la valeur prédéterminée, la partie de commande d'alimentation de gaz commande le compresseur de manière à arrêter l'alimentation du gaz dans la chambre de stockage.
